# EUROPÄISCHE PATENTANMELDUNG

(11) **EP 3 800 047 A1**
(43) Veröffentlichungstag der Anmeldung: **07.04.2021**
(21) Anmeldenummer: 19200804.3
(22) Anmeldetag: 01.10.2019
(51) Int. Cl.: B32B 21/02, C08J 7/04, B32B 27/32, B32B 27/36, C08J 7/046, C23C 14/00

(54) **LAMINAT ALS SCHÜTZENDE MÖBELOBERFLÄCHE MIT DEKORATIVEM METALLEFFEKT**

(71) Anmelder: SURTECO GmbH, 86647 Buttenwiesen (DE)
(72) Erfinder: Pfeifer, Michael, 86368 Gersthofen (DE); Maier, Christoph, 89438 Holzheim (DE); Aydin, Engin Aytac, 86157 Augsburg (DE)
(74) Vertreter: Müller-Boré & Partner Patentanwälte PartG mbB

(57) **Zusammenfassung**

Die vorliegende Erfindung betrifft ein Laminat, insbesondere für die Herstellung einer Möbeloberfläche mit einem dekorativen Metalleffekt, ein Verfahren zur Herstellung des Laminats, sowie die Verwendung des Laminats als schützende Möbeloberfläche mit einem dekorativen Metalleffekt.

## Beschreibung

Die vorliegende Erfindung betrifft ein Laminat, insbesondere für die Herstellung einer Möbeloberfläche mit einem dekorativen Metalleffekt, ein Verfahren zur Herstellung des Laminats, sowie die Verwendung des Laminats als schützende Möbeloberfläche mit einem dekorativen Metalleffekt.

Aus dem Stand der Technik ist es bekannt, (Echt)-Metallfolien (beispielsweise Aluminium) in verschiedenen Schichtdicken (beispielsweise 300 µm) zur Kaschierung bzw. Laminierung auf Holzwerkstoffplatten (beispielsweise MDF-Platten, HDF-Platten, Spannplatten) zu verwenden, um so im Möbelbereich Oberflächen mit dekorativem Metalleffekt zu erzeugen. Die Beschaffenheit der Metallfolie wirkt sich dabei im Hinblick auf die Kratzfestigkeit der Oberfläche nachteilig aus. Zudem ist die Verwendung von Echt-Metall im Lebensmittelbereich, beispielsweise bei Küchenarbeitsplatten, aufgrund mangelhafter Beständigkeit und Löslichkeit gegenüber Salzen und Säuren nur sehr bedingt möglich. Als Lösungsansatz hierfür wurden die Metalloberflächen bisher einem mechanischen Schleifprozess unterzogen und anschließend beschichtet bzw. lackiert, was verfahrenstechnisch im Hinblick auf die Haftung zwischen Metalloberfläche und Beschichtung problematisch ist.

Der vorliegenden Erfindung liegt daher die Aufgabe zugrunde, ein Laminat bereitzustellen, das alternativ zu einer Echt-Metalloberfläche als Schutzschicht mit Dekor in Metalloptik (welche gegenüber (Echt)-Metall bezüglich Farbeindruck und Farbtiefe annähernd gleichwertig sein soll) im Möbelbereich verwendet werden kann, wobei das Laminat eine hohe (Oberflächen)-Kratzfestigkeit, Abriebfestigkeit, Beständigkeit und Widerstandsfähigkeit gegenüber Chemikalien, beispielsweise Salzen und Säuren, aufweist, sowie ein Verfahren zur Herstellung dieses Laminats, wobei das Verfahren den Herstellungsprozess dahingehend vereinfachen soll, dass kein Schleifprozess nötig ist und eine starke Haftung zwischen Lackierung und (Echt)-Metall entsteht.

Diese Aufgabe wird durch die in den Ansprüchen gekennzeichneten Ausführungsformen der vorliegenden Erfindung gelöst.

Insbesondere wird erfindungsgemäß ein Laminat bereitgestellt, umfassend
eine Kunststofffolie, auf deren eine Seite eine Metallschicht auf der Basis mindestens eines Metalls, ausgewählt aus Aluminium, Kupfer, Magnesium und Wolfram, aufgebracht ist und die auf dieser Seite oder auf der anderen Seite mit einem Dekor bedruckt ist;
eine Lackschicht, die auf der Seite der Kunststofffolie aufgebracht ist, die mit dem Dekor bedruckt ist; und
einen Haftvermittler oder einen Rückseitenstrich, aufgebracht auf der Seite der Kunststofffolie, auf welche die Lackschicht nicht aufgebracht ist.

Die Kunststofffolie unterliegt erfindungsgemäß keiner besonderen Einschränkung, solange sich auf diese eine Metallschicht auftragen lässt und die Folie mit einem Dekor (gegebenenfalls über eine Zwischenschicht) bedruckt werden kann. Gemäß einer bevorzugten Ausführungsform der vorliegenden Erfindung ist die Kunststofffolie eine Polyethylenterephthalatfolie (PET-Folie) oder eine Polypropylenfolie (PP-Folie), insbesondere eine biaxial gereckte Polyethylenterephthalatfolie (BOPET) oder eine biaxial gereckte Polypropylenfolie (BOPP). Gemäß einer besonders bevorzugten Ausführungsform ist die Kunststofffolie eine biaxial gereckte Polyethylenterephthalatfolie (PET-Folie; BOPET), da diese vorteilhafterweise eine erhöhte Temperaturbeständigkeit und Stoßfestigkeit aufweist. Die Kunststofffolie weist vorzugsweise eine Dicke von 20 bis 500 µm, besonders bevorzugt von 30 bis 150 µm auf. Ist die Dicke der Kunststofffolie zu gering, so besteht die Gefahr, dass Schwierigkeiten bei der Planlage im Verarbeitungsprozess bei der Lackierung und Bedruckung oder bei der Laminatherstellung auftreten. Eine zu dicke Folie hingegen ist nachteilig im Preis und es besteht die Gefahr, dass beim Produktionsprozess Schwierigkeiten durch die Steifigkeit des Materials auftreten.

Die Kunststofffolie ist erfindungsgemäß auf mindestens einer (Oberflächen)-Seite mit einem Dekor bedruckt. Die für das aufgedruckte Dekormuster verwendete Druckfarbe und das verwendete Druckverfahren unterliegen dabei keiner besonderen Einschränkung. Beispielsweise können bekannte Farben mit casein- oder acrylatbasierenden Bindemittelsystemen und organischen oder anorganischen Farbpigmenten verwendet werden. Die Bedruckung kann beispielsweise über Digitaldruck, Tiefdruck, Siebdruck oder Flexodruck erfolgen. Neben wasserbasierenden Farbsystemen ist auch die Verwendung von Farbsystemen auf Lösemittelbasis oder von UV härtenden Farbsystemen möglich.

Das Dekor kann entweder direkt auf die Kunststofffolie gedruckt sein oder vorzugsweise über eine Zwischenschicht, die für eine gute Farbhaftung sorgt. Die Zwischenschicht kann beispielsweise eine Schicht auf Acrylbasis oder auf Polyurethanbasis sein. Alternativ kann das Dekor auch auf die Metallschicht gedruckt sein.

Auf einer (Oberflächen)-Seite der Kunststofffolie, d.h. entweder auf der (Oberflächen)-Seite der Kunststofffolie, die nicht mit einem Dekor bedruckt ist, oder auf der (Oberflächen)-Seite die bedruckt ist, ist eine Metallschicht auf der Basis mindestens eines Metalls, ausgewählt aus Aluminium, Kupfer, Magnesium und Wolfram, (festhaftend) aufgebracht. Die Kunststofffolie ist somit metallisiert und es ist nicht lediglich eine Metallfolie auf die Kunststofffolie kaschiert bzw. laminiert. Gemäß einer bevorzugten Ausführungsform ist die Metallschicht auf der anderen (Oberflächen)-Seite der Kunststofffolie, d.h. auf der (Oberflächen)-Seite der Kunststofffolie, die nicht mit einem Dekor bedruckt ist, aufgebracht.

Gemäß einer bevorzugten Ausführungsform ist die Metallschicht eine Aluminiumschicht. Die Metallschicht befindet sich entweder in direktem Kontakt mit der Oberfläche der Kunststofffolie, oder ist mit dieser über eine haftvermittelnde Schicht (Primer) verbunden. Gemäß einer bevorzugten Ausführungsform befindet sich sie Metallschicht in direktem Kontakt mit der Oberfläche der Kunststofffolie. Vorteilhafterweise erweckt die Metallschicht aufgrund ihrer Aufbringung auf die Kunststofffolie und aufgrund des gedruckten Dekors auf der (vorzugsweise) gegenüberliegenden Seite der Metallschicht den Eindruck einer Schliff-Struktur (d.h. einer Metall-Schliffstruktur, wobei das Metall vorzugsweise Aluminium, Kupfer, Magnesium und/oder Wolfram ist), insbesondere einer Aluschliff-Struktur, d.h. die Metallschicht erweckt optisch den Eindruck eines geschliffenen/gebürsteten Metalls (insbesondere von Aluminium). Gemäß einer bevorzugten Ausführungsform weist die Metallschicht eine Dicke von 150 bis 700 Å, besonders bevorzugt von 300 bis 450 Å, am meisten bevorzugt von 375 bis 425 Å auf.

Das erfindungsgemäße Laminat umfasst weiter eine (ausgehärtete) Lackschicht, die auf der (Oberflächen)-Seite der Kunststofffolie aufgebracht ist, die mit dem Dekor bedruckt ist. Die Lackschicht sorgt im erfindungsgemäßen Laminat für eine ausreichende Kratzfestigkeit, Beständigkeit gegen Lösungsmittel bzw. Chemikalien und Abriebbeständigkeit. Die Lackschicht unterliegt erfindungsgemäß keiner besonderen Einschränkung. Gemäß einer bevorzugten Ausführungsform der vorliegenden Erfindung umfasst die Lackschicht mindestens einen Lack, der UV- und/oder Elektronenstrahl-härtende und/oder säurehärtende Komponenten umfasst, besonders bevorzugt mindestens eine Elektronenstrahl-härtende Komponente. Gemäß einer besonders bevorzugten Ausführungsform umfasst die Lackschicht einen Acrylatlack. Zudem kann durch die Art des Lacks vorteilhafterweise der Glanzgrad des erfindungsgemäßen Bodenbelags über einen weiten Bereich, d.h. von 0,5 bis 160 Glanzgradpunkten, gemessen im 60° Winkel nach DIN 67530, eingestellt werden.

Die Menge der aufgebrachten Lackschicht und damit auch die Dicke der Lackschicht unterliegen erfindungsgemäß keiner besonderen Einschränkung. Gemäß einer bevorzugten Ausführungsform ist die Lackschicht in einer Menge von 3 g/m² bis 100 g/m², bevorzugt von 5 g/m² bis 30 g/m², aufgebracht. Die Lackschicht weist dann eine Dicke von 5 µm bis 200 µm auf. Ein zu großer Auftrag würde die Kosten ohne Nutzen erhöhen. Ein zu geringer Auftrag gewährleistet keine ausreichende Abdeckung.

Gemäß einer bevorzugten Ausführungsform umfasst die Lackschicht weiter harte mineralische Partikel, wie zum Beispiel Korund, Siliciumoxid, Siliciumcarbid, Keramik und/oder Glaspartikel. Gemäß einer besonders bevorzugten Ausführungsform umfasst die Lackschicht Korund, bevorzugt in einer Korngröße von 1 µm bis 30 µm, besonders bevorzugt von 5 µm bis 15 µm. Der Korundanteil beträgt vorzugsweise von 1 g/m² bis 15 g/m². Durch Verwendung der vorstehenden harten mineralischen Partikel, insbesondere bei einer Verwendung von Korund, in der Lackschicht können vorteilhafterweise die darunterliegenden Schichten vor Abnutzung und Beschädigung geschützt werden, insbesondere wenn das Laminat im Fußboden- oder Türbereich verwendet wird.

Gemäß einer Ausführungsform der vorliegenden Erfindung weist die Lackschicht eine glatte bzw. ebene Oberfläche auf. Gemäß einer alternativen Ausführungsform weist die Lackschicht eine Oberflächenstrukturierung auf. In diesem Zusammenhang bedeutet "Oberflächenstrukturierung", dass die Lackschicht eine dreidimensionale Oberflächenstruktur mit Erhebungen und/oder Vertiefungen aufweist. Dies ist besonders vorteilhaft, wenn das erfindungsgemäße Laminat eine naturauthentische Oberfläche darstellen soll. Derartige naturauthentische Oberflächen zeichnen sich durch eine Oberflächenstruktur aus, die insbesondere synchron zum Druckbild des Dekors verläuft. "Synchron" bedeutet hierbei, dass Oberflächentopographie und Druckbild möglichst exakt zueinander passen. Eine Strukturierung ist beispielsweise mit und ohne Druck mit einer Prägung mittels Trennpapier, Trennfolien und Pressblechen bzw. -bändern möglich.

Das erfindungsgemäße Laminat umfasst weiter einen Haftvermittler ("Primer") oder einen Rückseitenstrich. Der Haftvermittler oder der Rückseitenstrich sind auf der Seite der Kunststofffolie aufgebracht, auf welcher die Metallschicht aufgebracht ist. Gemäß einer bevorzugten Ausführungsform ist der Haftvermittler oder der Rückseitenstrich direkt auf der Metallschicht aufgebracht. Der Haftvermittler ermöglicht eine Verpressung bzw. eine Verklebung mit Kunststoff(platten) und/oder Holzwerkstoffplatten (der Möbel). Alternativ wird für die Verklebung ein Rückseitenstrich aufgetragen. Derartige Haftvermittler und Rückseitenstriche sind dem Fachmann bekannt und können in Abhängigkeit der zu verpressenden bzw. verklebenden Holzwerkstoffplatte ausgewählt werden.

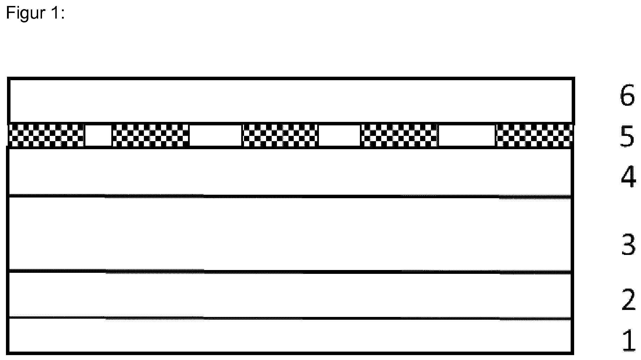

Figur 1 zeigt eine Ausführungsform des erfindungsgemäßen Laminats, das aus einem Haftvermittler (1), einer Metallschicht (2), einer Kunststofffolie (3), einer Zwischenschicht (4), einem Dekor (5) und eine Lackschicht (6) aufgebaut ist. Metallschicht (2) und Dekor (5) befinden sich in der gezeigten Ausführungsform auf unterschiedlichen Seiten der Kunststofffolie (3).

Zudem stellt die vorliegende Erfindung ein Verfahren zur Herstellung des erfindungsgemäßen Laminats bereit, umfassend die Schritte:
(a) Bereitstellen einer Kunststofffolie;
(b) Aufbringen einer Metallschicht auf der Basis mindestens eines Metalls, ausgewählt aus Aluminium, Kupfer, Magnesium und Wolfram, auf eine Seite der Kunststofffolie;
(c) Bedrucken dieser Seite oder der anderen Seite der Kunststofffolie mit einem Dekor;
(d) Aufbringen einer Lackschicht auf der Seite der Kunststofffolie, die mit dem Dekor bedruckt ist; und
(e) Aufbringen eines Haftvermittlers oder eines Rückseitenstrichs auf der Seite der Kunststofffolie, auf welcher die Lackschicht nicht aufgebracht ist.

Im Schritt (a) des erfindungsgemäßen Verfahrens wird eine Kunststofffolie bereitgestellt. Die Kunststofffolie des erfindungsgemäßen Verfahrens entspricht der vorstehend beschriebenen Kunststofffolie des erfindungsgemäßen Laminats.

Im Schritt (b) des erfindungsgemäßen Verfahrens wird eine Metallschicht auf eine (Oberflächen)-Seite der Kunststofffolie (festhaftend) aufgebracht, d.h. die (Oberflächen)-Seite der Kunststofffolie wird metallisiert und es ist nicht lediglich eine Metallfolie auf die Kunststofffolie kaschiert bzw. laminiert. Die Metallschicht des erfindungsgemäßen Verfahrens entspricht der vorstehend beschriebenen Metallschicht des erfindungsgemäßen Laminats. Die Art der Aufbringung der erfindungsgemäßen Metallschicht unterliegt keiner besonderen Einschränkung. Beispielsweise kann die Metallschicht mittels eines Druckverfahrens (beispielsweise Tiefdruck, Siebdruck, Inkjet, Offset, Flexodruck), mittels eines Lackierverfahrens oder eines Vakuumbeschichtungsverfahrens aufgebracht werden.

Im Schritt (c) des erfindungsgemäßen Verfahrens wird die metallisierte Seite der Kunststofffolie oder die andere (Oberflächen)-Seite der Kunststofffolie, d.h. die (Oberflächen)-Seite, auf der nicht die Metallschicht aufgebracht ist, mit einem Dekor bedruckt. Die für das aufgedruckte Dekormuster verwendete Druckfarbe und das verwendete Druckverfahren unterliegen dabei keiner besonderen Einschränkung. Beispielsweise können bekannte Farben mit casein- oder acrylatbasierenden Bindemittelsystemen und organischen oder anorganischen Farbpigmenten verwendet werden. Neben wasserbasierenden Farbsystemen ist auch die Verwendung von Farbsystemen auf Lösemittelbasis oder von UV härtenden Farbsystemen möglich. Die Bedruckung kann beispielsweise über Digitaldruck, Tiefdruck, Siebdruck oder Flexodruck erfolgen.

Im Schritt (d) des erfindungsgemäßen Verfahrens wird eine Lackschicht auf der Seite der Kunststofffolie aufgebracht, die mit dem Dekor bedruckt ist. Die Lackschicht des erfindungsgemäßen Verfahrens entspricht der vorstehend beschriebenen Lackschicht des erfindungsgemäßen Laminats. Die Art der Auftragung der Lackschicht unterliegt erfindungsgemäß keiner besonderen Einschränkung und kann beispielsweise mittels üblicher Verfahren wie Walzenauftrag, im Sprühverfahren, im Vorhang gegossen oder mittels Ink-Jet erfolgen. Die Menge und Art des Lacks und die Dicke der Auftragung zur Bildung der Lackschicht sowie optionale Additive wie harte mineralische Partikel und deren Menge im Lack sind dabei wie vorstehend bei dem erfindungsgemäßen Laminat beschrieben. Die Aushärtung der Lackschicht erfolgt vorzugsweise mittels UV- und/oder Elektronenstrahlung oder mittels Temperaturerhöhung im Falle des Einsatzes von säurehärtenden Komponenten. Die UV-Härtung bzw. Elektronenstrahl-Härtung wirkt unverzüglich, so dass der Lack nach der Bestrahlung ausgehärtet ist. Gemäß einer Ausführungsform umfasst das Verfahren einen Schritt des Strukturierens der Lackschicht vor der Aushärtung. Durch Strukturieren der Lackschicht können vorteilhafterweise naturauthentische Oberflächen bereitgestellt werden, die synchron zum Druckbild des Laminats verlaufen, so dass beispielsweise eine zu einer Holz- oder Steinoberfläche authentische Optik und Haptik entsteht.

Im Schritt (e) des erfindungsgemäßen Verfahrens wird ein Haftvermittler oder ein Rückseitenstrich auf der Seite der Kunststofffolie aufgebracht, auf welcher die Lackschicht nicht aufgebracht ist. Der Haftvermittler und der Rückseitenstrich des erfindungsgemäßen Verfahrens entsprechen dem vorstehend beschriebenen Haftvermittler und dem vorstehend beschriebenen Rückseitenstrichs des erfindungsgemäßen Laminats. Die Art der Auftragung des Haftvermittlers oder des Rückseitenstrichs unterliegt erfindungsgemäß keiner besonderen Einschränkung und kann beispielsweise mittels üblicher Verfahren wie Walzenauftrag, im Sprühverfahren, im Vorhang gegossen oder mittels Ink-Jet erfolgen. Die Menge und Art des Haftvermittlers oder des Rückseitenstrichs und die Dicke der Auftragung sind dabei wie vorstehend bei dem erfindungsgemäßen Laminat beschrieben.

Die Reihenfolge der Schritte (b) bis (e) des erfindungsgemäßen Verfahrens unterliegt keiner besonderen Einschränkung, solange der Schritt (e) nach dem Schritt (b) und der Schritt (d) nach dem Schritt (c) durchgeführt wird.

Das erfindungsgemäße Verfahren umfasst vorzugsweise einen Schritt (f), der vor dem Schritt (b) oder vor dem Schritt (c) durchgeführt wird. Im optionalen Schritt (f) wird eine Zwischenschicht auf der Seite der Kunststofffolie aufgebracht, welche im Schritt (c) mit dem Dekor bedruckt wird. Die Zwischenschicht des erfindungsgemäßen Verfahrens entspricht der vorstehend beschriebenen Zwischenschicht des erfindungsgemäßen Laminats. Die Art der Auftragung der Zwischenschicht unterliegt erfindungsgemäß keiner besonderen Einschränkung und kann beispielsweise mittels üblicher Verfahren wie Walzenauftrag, im Sprühverfahren, im Vorhang gegossen oder mittels Ink-Jet erfolgen. Die Menge und Art der Zwischenschicht und die Dicke der Auftragung sind dabei wie vorstehend bei dem erfindungsgemäßen Laminat beschrieben. Vor dem Schritt (b) kann auch optional in einem weiteren Schritt eine haftvermittelnde Schicht (Primer) generiert werden, um die Haftung der Metallschicht auf der Kunststofffolie zu erhöhen. Die Metallschicht wird dann im Schritt (b) auf die haftvermittelnde Schicht aufgebracht.

Ein weiterer Gegenstand der vorliegenden Erfindung betrifft die Verwendung des erfindungsgemäßen Laminats als schützende Möbeloberfläche mit einem dekorativen Metalleffekt.

Die vorliegende Erfindung stellt vorteilhafterweise ein Laminat bereit, das alternativ zu einer Echt-Metalloberfläche als Schutzschicht mit Dekor in Metalloptik im Möbelbereich verwendet werden kann. Die Metalloptik ist dabei gegenüber (Echt)-Metall bezüglich Farbeindruck und Farbtiefe annähernd gleichwertig. Das erfindungsgemäße Laminat weist vorteilhafterweise eine hohe (Oberflächen)-Kratzfestigkeit, Abriebfestigkeit, Beständigkeit und Widerstandsfähigkeit gegenüber Chemikalien, beispielsweise Salzen und Säuren, auf, und kann deutlich kostengünstiger und einfacher hergestellt werden als eine Echt-Metall(Aluminium)-Oberflächenbeschichtung. Zudem findet bei einer Verwendung als Oberfläche für eine Küchenarbeitsplatte kein Kontakt zwischen Metalloberfläche und Lebensmittel statt. Das erfindungsgemäße Laminat erlaubt unterschiedliche Dekorausprägungen mit Metalleffekt, ohne dass eine mechanische Schliffstruktur hergestellt werden muss. Bei der Herstellung von Möbeloberflächen kann das erfindungsgemäße Laminat vorteilhafterweise einfach bei unterschiedlichen Press- bzw. Kaschierverfahren (beispielsweise Conti-HPL-Pressverfahren, KT, HPL, Kaschierung usw.) unter Verwendung vorhandener Anlagentechnologie eines Laminatherstellers eingesetzt werden.

### Bezugszeichenliste

- 1: Haftvermittler ("Primer") oder Rückseitenstrich
- 2: Metallschicht
- 3: Kunststofffolie
- 4: Zwischenschicht
- 5: Dekor
- 6: Lackschicht

## Patentansprüche

1. Laminat, umfassend
eine Kunststofffolie, auf deren eine Seite eine Metallschicht auf der Basis mindestens eines Metalls, ausgewählt aus Aluminium, Kupfer, Magnesium und Wolfram, aufgebracht ist und die auf dieser Seite oder auf der anderen Seite mit einem Dekor bedruckt ist;
eine Lackschicht, die auf der Seite der Kunststofffolie aufgebracht ist, die mit dem Dekor bedruckt ist; und
einen Haftvermittler oder einen Rückseitenstrich, aufgebracht auf der Seite der Kunststofffolie, auf welcher die Lackschicht nicht aufgebracht ist.

2. Laminat nach Anspruch 1, wobei die Kunststofffolie eine PET-Folie oder eine Polypropylenfolie, insbesondere eine biaxial gereckte PET-Folie oder eine biaxial gereckte Polypropylenfolie ist.

3. Laminat nach Anspruch 1 oder 2, wobei die Kunststofffolie eine Dicke von 20 bis 500 µm aufweist.

4. Laminat nach einem der Ansprüche 1 bis 3, wobei die Metallschicht eine Aluminiumschicht ist.

5. Laminat nach einem der Ansprüche 1 bis 4, wobei der Lackschicht einen strahlenhärtenden Lack auf Acrylatbasis, einen UV-Lack oder ein säurehärtendes Lacksystem umfasst.

6. Laminat nach einem der Ansprüche 1 bis 5, weiter umfassend eine Zwischenschicht zwischen der Kunststofffolie und dem Dekordruck.

7. Laminat nach Anspruch 6, wobei die Zwischenschicht eine Schicht auf Acrylbasis oder auf Polyurethanbasis ist.

8. Laminat nach einem der Ansprüche 1 bis 7, wobei die Metallschicht eine Dicke von 150 bis 700 Å aufweist.

9. Verfahren zur Herstellung des Laminats nach einem der Ansprüche 1 bis 8, umfassend die Schritte:
(a) Bereitstellen einer Kunststofffolie;
(b) Aufbringen einer Metallschicht auf der Basis mindestens eines Metalls, ausgewählt aus Aluminium, Kupfer, Magnesium und Wolfram, auf eine Seite der Kunststofffolie;
(c) Bedrucken dieser Seite oder der anderen Seite der Kunststofffolie mit einem Dekor;
(d) Aufbringen einer Lackschicht auf der Seite der Kunststofffolie, die mit dem Dekor bedruckt ist; und
(e) Aufbringen eines Haftvermittlers oder eines Rückseitenstrichs auf der Seite der Kunststofffolie, auf welcher die Lackschicht nicht aufgebracht ist.

10. Verfahren nach Anspruch 9, wobei die Metallschicht mittels eines Druckverfahrens aufgebracht wird.

11. Verfahren nach Anspruch 9, wobei die Metallschicht mittels eines Lackierverfahrens aufgebracht wird.

12. Verfahren nach Anspruch 9, wobei die Metallschicht mittels eines Vakuumbeschichtungsverfahrens aufgebracht wird.

13. Verfahren nach einem der Ansprüche 9 bis 12, weiter umfassend einen Schritt (f) vor dem Schritt (b) oder vor dem Schritt (c):
(f) Aufbringen einer Zwischenschicht auf die Seite der Kunststofffolie, welche im Schritt (c) mit dem Dekor bedruckt wird.

14. Verwendung des Laminats nach einem der Ansprüche 1 bis 8 als schützende Möbeloberfläche mit einem dekorativen Metalleffekt.
